# EUROPEAN PATENT APPLICATION

(11) **EP 1 746 185 A1**
(43) Date of publication of application: **24.01.2007**
(21) Application number: 05106740.3
(22) Date of filing: 22.07.2005
(51) Int. Cl.: C23C 30/00, C23C 28/00, C23C 8/10

(54) **Method for providing a thermal barrier coating and substrate having such coating**

(71) Applicant: Stichting voor de Technische Wetenschappen, 3527 JP Utrecht (NL)
(72) Inventor: Nijdam, Thijs Joost, NL-2628 XX Delft (NL); Jeurgens, Lars Petrus Henricus, 70569 Stuttgart (DE); Sloof, Willem Gerrit, NL-2622 DJ Delft (NL)
(74) Representative: van Westenbrugge, Andries

(57) **Abstract**

Method for providing a thermal barrier coating (5) and substrate (1). The thermal barrier coating (5) is provided on a thermally grown oxide (4) which is grown on a metallic bond coating (3) provided on said substrate (1). Adhesion between the bond coating and thermally grown oxide coating is improved by providing projections at the interface of yttria - alumina garnet (6) compounds. Service life at relatively high temperature of the thermally grown oxide coating (4) is improved by having alumina grain (6) with relatively large size. These are obtained by pre-annealing the bond coating in an inert gas atmosphere followed by controlled preoxidation.

## Description

The present invention relates to a method for providing a thermal barrier coating on a substrate comprising the provision of a metal bond coating on said substrate, followed by the provision of a thermally grown oxide on said metal coating, after which a ceramic coating is applied, wherein said thermally grown oxide is realized by a pre-oxidation treatment of said bond coating.

Such a method is generally known in the art. Blades of turbines but also other articles subjected to high temperatures are protected by providing a ceramic coating. Because of the different thermal expansion coefficients of the oxide and substrate and changing temperature conditions of the related component adhesion of the ceramic coating to the underlying substrate is a problem. One solution has been the provision of a bond coating on the substrate. This bond coating is preferably a metallic coating on which an oxide is thermally grown. Such oxide is a very good adhesion surface for a ceramic barrier coating.

For the success of this layered structure the adhesion between the bond coating and the thermally grown oxide is of considerable importance. Furthermore depletion of metal in the bond coating should be as low as possible to increase the service life of the related component. The grown oxide is predominantly alumina. It is aimed that an α-Al₂O₃ layer is realized without the forming of spinels. Also at the end presence of metastable alumina should be prevented as much as possible.

The advantage of thermal barrier coating being structured as described above are the relatively low cost and the easy way in which such coating can be provided. However, the service life is relatively limited under circumstances of rapidly changing temperature which could make such coating more expensive than other prior art coatings.

The invention aims to provide a thermal barrier coating with which the adhesion between the bond coating and a thermally grown oxide is improved resulting in a lower chance of failing of the ceramic coating. Furthermore it is aimed that the service life of the thermal barrier coating is considerably increased.

According to the invention this is realized with the features of claim 1.

Through the use of an annealing step before pre-oxidation of the bond coating provided on the substrate, chromium being present at the surface where the thermally grown oxide should be effected, can be removed by evaporation. Because of that no longer substantial chromium is present at the surface such that growing of alumina is promoted.

If the bond coating comprises yttrium (for scavenging of impurities) through the annealing treatment yttria will be present at the outerface of the bond coating. During the oxidation treatment small yttria alumina garnet crystallites result, acting as pegs to key the thermally grown oxide to the bond coating.

Preferably the bond coating comprises a MCrAlX bond coating wherein M is Ni, Co and/or iron where X is a reactive element for scavenging of impurities, such as yttrium, zirconium or hafnium.

During the annealing treatment a relatively low pressure is used to improve purity. The method can be effected during 5-60 min. and more particular during about 10 min. Such a treatment is relatively simple and can easily be incorporated in the process to provide the thermally grown oxide.

After the annealing step the pre-oxidation step is effected preferably in the same furnace. I.e. oxygen or an oxygen-inert gas mixture is injected in such furnace. Preferably this is realized under controlled circumstances such as a temperature between 1000 and 1200°C and oxygen partial pressure between 10-10⁴ Pa. Under those conditions it can be guaranteed that predominantly α-Al₂O₃ is formed. Because of the previous annealing step the outer surface of the bond coating is relatively clean and enriched in aluminum. It has been found that using the method as described above the grain size of the alumina is relatively large. The lateral size of the α-Al₂O₃ grains should be relatively large, i.e. larger than 1 µm. This is of importance because diffusion of oxygen through alumina occurs predominantly along the grain boundaries. By having relatively large sized alumina grains the total length of the grain boundaries will decrease. Preferably the oxidation time is between 1 and 5 hours.

It has been observed that substrates provided with the thermal barrier coating according to the invention have a service life extended by 200-400% over substrates not being provided with a thermal barrier coating according to the invention.

This means that the service interval for example airplane turbine can be increased resulting in lower non-operational time.

Partial pressure of the oxygen should not be increased over 10⁴ Pa because this will result in spinels. If the pressure is below 10 Pa yttria alumina garnet will no longer function as pegs to key the thermally grown oxide to the bond coating.

Except from effecting the treatment of pre-oxidation in the same furnace as the furnace wherein the annealing treatment is realized, it is also advantageous to effect the provision of the ceramic layer in the same furnace. Because of the clean atmosphere the effect of impurities will be suppressed. The ceramic coating can be provided by electron beam physical vapor deposition or air plasma spraying. However, other prior art methods for depositing a ceramic coating can be used.

The invention also relates to a substrate obtained by the method described above wherein between the bond coating and the thermally grown oxide layer pegs are provided comprising an impurities scavenging element oxide surrounded by alumina, such as an yttria alumina garnet. Preferably at the interface 1-10% of the surface area thereof comprises such pegs giving superior adhesion between the bond coating and the thermally grown oxide.

The size of the pegs described above should be relatively small, i.e. below 5 µm.

The invention provides a relatively slow growing α-alumina layer which is mechanically keyed to the bond coating.

The invention will be further elucidated referring to an example shown in the figures, wherein:
Fig. 1 schematically shows the provision of a thermal barrier coating; and
Fig. 2 gives a detail of such a substrate having a coating in cross-section.

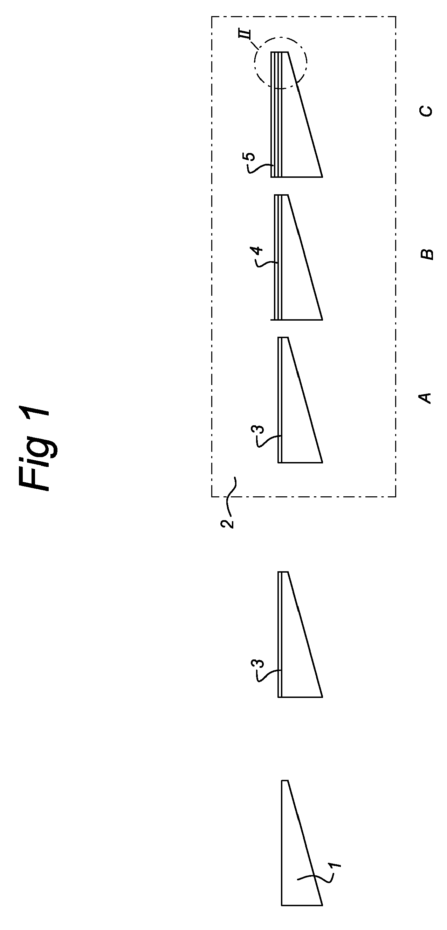

Fig. 1 shows a substrate to be covered by a thermal barrier coating (TBC) such as a vane. Such thermal barrier coating is a ceramic coating which should be adhered to the substrate which is usually a superalloy i.e. a nickel/cobalt based alloy. To provide adhesion between the ceramic coating and the substrate a bond coating is provided such as a MCrA1X bond coating. M is Ni or Co whereas X is a so-called reactive element such as yttrium. On this coating system a thermally grown oxide is provided, which protects the underlying substrate against high temperature oxidation and corrosion.

According to the invention starting from a substrate 1 a bond coating 3 is provided thereon. This can be effected with any process known in the art. Subsequently substrate 1 covered with bond coating 3 is entered into a furnace 2 which is at a temperature between 1000-1200°C and at a relatively low pressure (less than 10⁻³ Pa). This atmosphere is relatively clean and during a time of preferably about 10 minutes the bond coating is subjected to annealing. This has as result that chromium is removed from the free end surface of the coating. This is shown by step A. Subsequently in the same furnace oxygen is admitted at about the same temperature resulting in a thermally grown oxide. This is effected at a partial oxygen pressure of 10-10⁴ Pa within a temperature range of 1000-1200 °C and a time of 1-5 hours. This is effected at step B and the thermally grown oxide layer is indicated by 4.

After that preferably in the same furnace step C is effected wherein a ceramic layer is deposited on the thermally grown oxide.

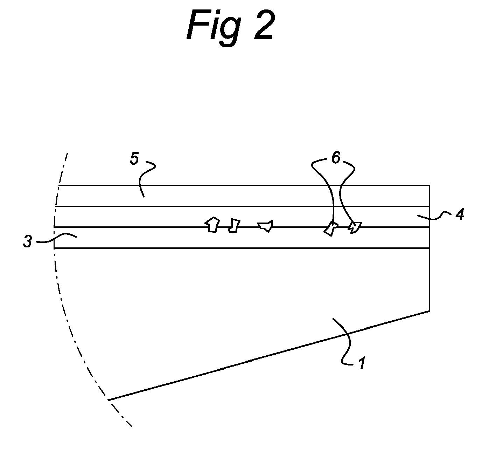

In fig. 2 a detail of the resulting compound layer is shown. It can be seen that on the bond coating 3 thermally grown oxide 4 is keyed by pegs 6 of yttria alumina garnet. The total surface area of the pegs is about 1-10% of the total interface surface area. Each of the pegs has a size smaller than 5 µm. The thermally grown oxide layer substantially comprises α-alumina having a relatively large lateral grain size of about 1 µm.

It has been found that this α-alumina layer is very slow growing during normal service of the blade at relatively elevated temperature. Because of that the depletion of Al from the bond coating is relatively slow resulting in a considerable service life. Slow growing oxide prolongs the time to mechanical failure of the ceramic coating. Because of the pegs 6 adhesion of the bond coating to the thermally grown oxide is optimized giving a further improvement in service life.

### Example

A 1 mm thick dual phase γ-Ni + β-NiA1 Ni-21Co-18Cr-22Al-0.2Y (at.%) bond coating was produced by Electron Beam Physical Vapour Deposition onto a steel plate of normal carbon content from which it subsequently was removed. After polishing of the bond coat surface, the following four pre-annealing and/or pre-oxidation treatments were performed (see Table 1):
(I) Pre-annealing at 1373 K for 1 h in flowing argon gas in a UHV chamber (base pressure < 10⁻⁷ Pa).
(II) Pre-oxidation at 1373 K for 1 h in a horizontal tube furnace at a *p*O₂ of 20 kPa in a gas flow of argon and 20 vol.% oxygen.
(III) Pre-annealing for 5 min at 1373 K in flowing argon gas in a UHV chamber, directly followed by pre-oxidation for 1 h in pure flowing oxygen gas at a temperature of 1373 K and a *p*O₂ of 100 Pa.
(IV) Pre-annealing for 5 min at 1373 K in flowing argon gas in a UHV chamber, directly followed by pre-oxidation for 1 h in pure flowing oxygen gas at a temperature of 1373 K and a *p*O₂ of 0.1 Pa.

| Treatment | Pre-annealing | Pre-oxidation | *p*O₂ during pre-oxidation |
|---|---|---|---|
| I | Yes | No | N.A. |
| II | No | Yes | 20 kPa |
| III | Yes | Yes | 100 Pa |
| IV | Yes | Yes | 0.1 Pa |

Detailed analysis of the resulting oxide layers after pre-annealing or pre-oxidation revealed that, for the pre-oxidation treatment performed at 20 kPa without pre-annealing, the oxide layer contained NiAl₂O₄ spinel next to α-Al₂O₃, and that the yttrium was located as large yttria alumina garnet crystallites along the oxide/bond coat interface. Pre-annealing without subsequent pre-oxidation resulted in the evaporation of Cr from the bond coating and the simultaneous formation of small yttria crystallites at the bond coat surface. Only if a combined pre-annealing and pre-oxidation treatment was applied, the oxide layer constituted exclusively of α-Al₂O₃. For the pre-oxidation treatment performed at 0.1 Pa, the α-Al₂O₃ nucleated almost immediately after the onset of oxidation. In this case the yttria formed upon pre-annealing was located within small yttria alumina garnet crystallites at the oxide surface after pre-oxidation. For the pre-oxidation treatment performed at 100 Pa, the α-Al₂O₃ transformed out of initially nucleated metastable θ-Al₂O₃. Only in this case, (i) the oxide layer had a large grain size and grew very slowly, and *(ii)* the resulting yttria alumina garnet crystallites were situated within the numerous small YA1 oxide protrusions (i.e. pegs) along the oxide/bond coat interface.

Next, similar NiCoCrAlY bond coatings as described above were deposited onto René N5 superalloy substrates. After polishing of the BC surface, these NiCoCrAlY coatings were given the same pre-annealing, pre-oxidation or combined pre-annealing and pre-oxidation treatments as listed in Table 1. Finally, a ceramic coating, consisting of 7 wt% yttria stabilised zirconia was deposited on top of the pre-oxidised bond coat surface. The prepared thermal barrier coatings were subsequently thermally cycled to failure for 1 h cycles at 1373 K. This thermal cycle test revealed that failure of the ceramic coating from the bond coating was delayed by a factor 2 to 4 if the combined pre-annealing and pre-oxidation treatment at 100 Pa was conducted prior to ceramic coating deposition. It was established that the presence of yttria alumina garnet protrusions at the oxide/bond coat interface and a low α-Al₂O₃ growth rate were the main factors responsible for the long service life of the thermal barrier coating systems prepared with the combined pre-annealing and pre-oxidation treatment at 100 Pa.

## Claims

1. A method for providing a thermal barrier coating on a substrate comprising the provision of a metal bond coating on said substrate, followed by the provision of a thermally grown oxide on said metal coating, after which a ceramic coating is applied, wherein said thermally grown oxide is realized by a pre-oxidation treatment of said bond coating, **characterized in that** after provision of said bond coating and before the pre-oxidation treatment thereof the bond coating is annealed by subjecting to a temperature 1000-1200°C during 5-60 min. at a pressure lower than 10⁻³ Pa.

2. Method according to claim 1, wherein said bond coating is an MCrA1X bond coating, wherein M is Ni, Co and/or Fe and X are impurities scavenging elements.

3. Method according to one of the preceding claims, wherein said pre-oxidation treatment comprises subjecting said substrate with said bond coating to a temperature of 1000-1200°C at an oxygen partial pressure of 10-10⁴ Pa.

4. Method according to claim 3, wherein said pre-oxidation treatment is effected immediately after said annealing.

5. Method according to claim 4, wherein said pre-oxidation treatment is effected in the same furnace as said annealing.

6. Method according to one of the preceding claims, wherein providing of said ceramic layer is effected in the same furnace as in which the pre-oxidation treatment is realized.

7. Substrate comprising a thermal barrier coating having a bond coating, a thermally grown oxide and a ceramic layer, wherein at the interface between said bond coating and said thermally grown layers protrusions comprising an impurities scavenging element oxide surrounded by alumina, such as an yttria alumina garnet are provided.

8. Substrate according to claim 7, wherein 1-10% of the surface area of said interface comprises said protrusions.

9. Method according to claim 8, wherein said impurities scavenging element oxide protrusions are arranged in projections having a size smaller than 5 µm.

10. Method according to one of the claims 7-9, wherein the grain size of said aluninum oxides in said thermally grown oxide layer is larger than 1 µm.

11. Turbine blade comprising an Ni or Co based alloy substrate having a coating according to one of claims 7-10.
